# EUROPEAN PATENT APPLICATION

(11) **EP 4 769 928 A1**
(43) Date of publication of application: **01.07.2026**
(21) Application number: 24882011.0
(22) Date of filing: 28.08.2024
(51) Int. Cl.: H02M 7/48, B60K 1/00, H05K 7/20

(54) **POWER CONVERSION DEVICE**

(30) Priority: 27.10.2023 JP 2023184659
(71) Applicant: AISIN CORPORATION, Aichi 448-8650 (JP)
(72) Inventor: MUTSUURA, Keita, Aichi 448-8650 (JP); TAKEMOTO, Keisuke, Aichi 448-8650 (JP); SUGIMOTO, Noriaki, Aichi 448-8650 (JP); KOASHI,Hidefumi, Aichi 448-8650 (JP); HANAMURA, Takuya, Aichi 448-8650 (JP); HAGITA, Kazuhiro, Aichi 448-8650 (JP)
(74) Representative: Kramer Barske Schmidtchen Patentanwälte PartG mbB
(86) International application number: PCT/JP2024/030590
(87) International publication number: WO 2025/088894

(57) **Abstract**

A power conversion device includes a plurality of electronic components having different amounts of heat generation and different heat-resistant temperatures, and a cooling plate through which a cooling fluid that cools a plurality of the electronic components flows. A plurality of the electronic components include a first cooling target having a relatively small amount of heat generation and a relatively low heat-resistant temperature, and a second cooling target having a relatively large amount of heat generation and a relatively high heat-resistant temperature, and in the cooling plate, a flow path is formed such that the cooling fluid flows from the first cooling target toward the second cooling target.

## Description

### TECHNICAL FIELD

The present disclosure relates to a power conversion device.

### BACKGROUND ART

In recent years, automobiles including a motor as a traveling drive source (a hybrid electric vehicle (HEV), a plug-in hybrid electric vehicle (PHEV), a battery electric vehicle (BEV), a fuel cell electric vehicle (FCEV) and the like) have been widely used. These automobiles include a vehicle drive device that drives a motor or the like, and the vehicle drive device includes a power conversion device having a plurality of electronic components.

Patent Literature 1, whose source is indicated below, describes such a power conversion device. In the power conversion device, a plurality of electronic components constituting a voltage conversion circuit are housed in a main body. The power conversion device is configured to include a first heat sink including a first duct connected to an intake port of cooling air, a second duct, and a first fin, a second heat sink including a second fin, and an exhaust fan, and to be capable of cooling a plurality of heat generating components by the cooling air.

### CITATION LIST

### PATENT LITERATURE

Patent Literature 1: JP 2017-131103 A

### SUMMARY OF INVENTION

### TECHNICAL PROBLEMS

A small and high-performance power conversion system is required with the improvement in vehicle performance in a hybrid electric vehicle (HEV), a plug-in hybrid electric vehicle (PHEV), a battery electric vehicle (BEV), and the like that are configured to be capable of traveling by electric power.

As described above, the vehicle that is configured to be capable of traveling by electric power often employs a configuration including a vehicle drive device in which an electric motor, a reduction gear, and the like are housed in a case. In addition, the vehicle including the vehicle drive device requires a power conversion device that supplies power to an electric motor.

In the power conversion device, for example, one package of high-voltage components has been developed, and the power conversion device includes power supply modules such as an inverter, a DC-DC converter, and a charger (OBC) as the components. The power conversion device includes heavy components such as a filter and a transformer, and as the system becomes complicated, each component needs to be cooled without exceeding a heat-resistant temperature. As described above, in a case where the inverter, the power supply module, and the motor are mixed in the power conversion device, depending on a cooling order, the heat-resistant temperature of the electronic component is exceeded and the load amount is limited, so that performance may not be sufficiently exhibited. Furthermore, there is also a possibility that the electronic components are damaged.

The power conversion device of Patent Literature 1 discloses that a plurality of electronic components (heat generating components) are arranged in order from a component having a low heat-resistant temperature. However, in the power conversion device described in Patent Literature 1, there is no disclosure of considering the amount of heat generation in the plurality of electronic components. That is, in the case of an electronic component that has a large amount of heat generation regardless of a low heat-resistant temperature, the heat-resistant temperature of the component may be exceeded. Therefore, in the power conversion device, there is room for improvement in effectively cooling the electronic component.

Therefore, there is a demand for a power conversion device capable of effectively cooling a plurality of electronic components having different amounts of heat generation and heat-resistant temperatures.

### SOLUTIONS TO PROBLEMS

An embodiment of a power conversion device according to the present disclosure includes a plurality of electronic components having different amounts of heat generation and different heat-resistant temperatures, and a cooling plate through which a cooling fluid that cools a plurality of the electronic components flows, a plurality of the electronic components include a first cooling target having a relatively small amount of heat generation and a relatively low heat-resistant temperature, and a second cooling target having a relatively large amount of heat generation and a relatively high heat-resistant temperature, and in the cooling plate, a flow path is formed such that the cooling fluid flows from the first cooling target toward the second cooling target.

In this configuration, in the cooling plate, the flow path is formed such that the cooling fluid flows from the first cooling target having a relatively small amount of heat generation and a relatively low heat-resistant temperature toward the second cooling target having a relatively large amount of heat generation and a relatively high heat-resistant temperature among the plurality of electronic components. In this way, the cooling fluid cools the first cooling target and the second cooling target in this order, and thus the first cooling target can be reliably cooled by the cooling fluid. In addition, since the first cooling target has a relatively small amount of heat generation and a relatively low heat-resistant temperature, even if the cooling fluid cools the first cooling target, the increase in temperature is small. Therefore, the second cooling target can also be efficiently cooled by the cooling fluid. In this way, it is possible to achieve a power conversion device capable of effectively cooling a plurality of electronic components having different amounts of heat generation and heat-resistant temperatures.

### BRIEF DESCRIPTION OF DRAWINGS

FIG. 1 is a longitudinal sectional view of a vehicle drive device that houses a conversion module.
FIG. 2 is a perspective view of a power conversion device according to a first embodiment, including an inverter.
FIG. 3 is an exploded perspective view of the power conversion device according to the first embodiment.
FIG. 4 is a cooling circuit diagram illustrating a cooling fluid flow path and a refrigerant flow path.
FIG. 5 is a power conversion circuit diagram of the power conversion device according to the first embodiment.
FIG. 6 is a cross-sectional view illustrating the outline of the power conversion device according to the first embodiment.
FIG. 7 is a cross-sectional view taken along line VII-VII in FIG. 1.
FIG. 8 is a cross-sectional view taken along line VIII-VIII in FIG. 1.
FIG. 9 is a partial cross-sectional view of a power conversion device according to a second embodiment.
FIG. 10 is an exploded perspective view of a vehicle drive device and a housing according to another embodiment (e).

### DESCRIPTION OF EMBODIMENTS

Hereinafter, embodiments of a power conversion device and a vehicle drive device according to the present disclosure will be described with reference to the drawings. In the present embodiment, the power conversion device B has a plurality of conversion modules arranged in a stacked state in a vertical direction, but the number of conversion modules and specific example arrangements of electronic components constituting the conversion modules are not limited to the following embodiments, and various modifications can be made without departing from the gist thereof.

### [First Embodiment]

### [Basic Configuration]

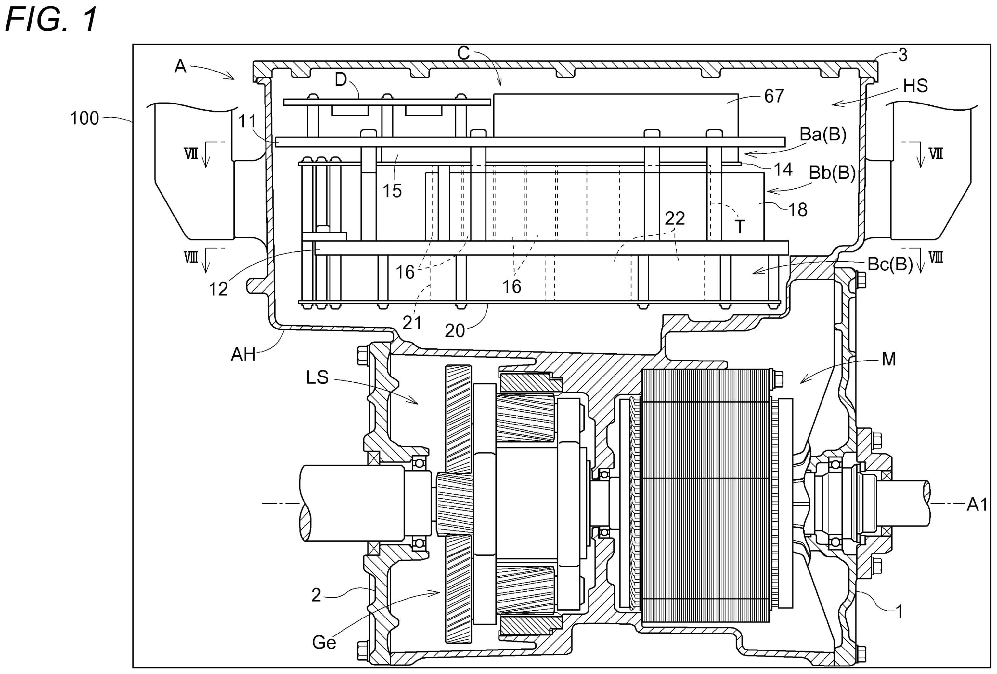

FIG. 1 illustrates a vehicle drive device A that transmits driving force of a traveling motor M to driving wheels (not illustrated) of a vehicle. The vehicle drive device A houses the traveling motor M, the gear mechanism Ge that decelerates the driving force of the traveling motor M and transmits the driving force to driving wheels, the power conversion device B, and the inverter C in the housing AH. Hereinafter, a vehicle including the traveling motor M as a traveling drive source is also referred to as an electric vehicle. Examples of the electric vehicle include a hybrid electric vehicle (HEV), a plug-in hybrid electric vehicle (PHEV), a battery electric vehicle (BEV), and a fuel cell electric vehicle (FCEV).

Since the vehicle drive device A is provided in an electric vehicle 100 in the vertical relationship illustrated in FIG. 1, the vertical relationship will be described with reference to the vertical direction illustrated in FIG. 1 in the present embodiment. In addition, FIG. 1 illustrates a longitudinal section of the vehicle drive device A as viewed in a front-rear direction, and the left-right direction in FIG. 1 is a width direction of a vehicle body.

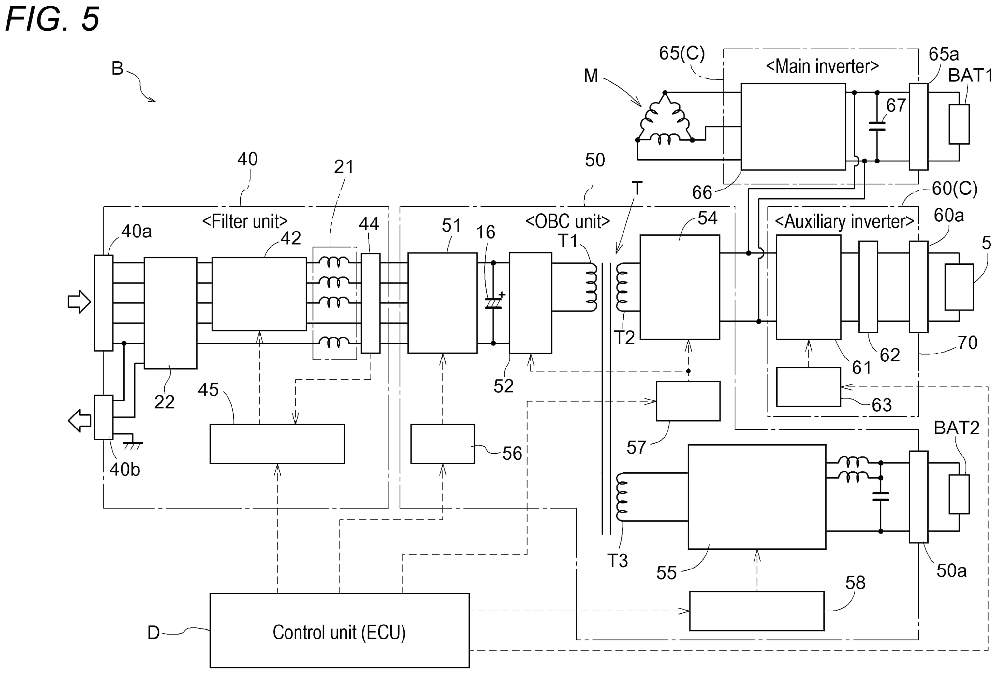

As illustrated in FIG. 5, the power conversion device B converts AC power from an AC power supply (basically, a commercial power supply) supplied from the outside of the electric vehicle 100 into high-voltage DC power. The converted high-voltage DC power is charged in a main battery BAT1 disposed outside the vehicle drive device A. In addition, the power conversion device B converts DC power from the main battery BAT1 to generate AC power similar to the commercial power supply, and supplies the AC power to the outside of the electric vehicle 100.

As illustrated in FIG. 5, the inverter C converts DC power from the main battery BAT1 into three-phase AC power and supplies the three-phase AC power with controlled frequency to the traveling motor M. As a result, the driving wheels of the electric vehicle 100 are driven to cause the electric vehicle 100 to travel.

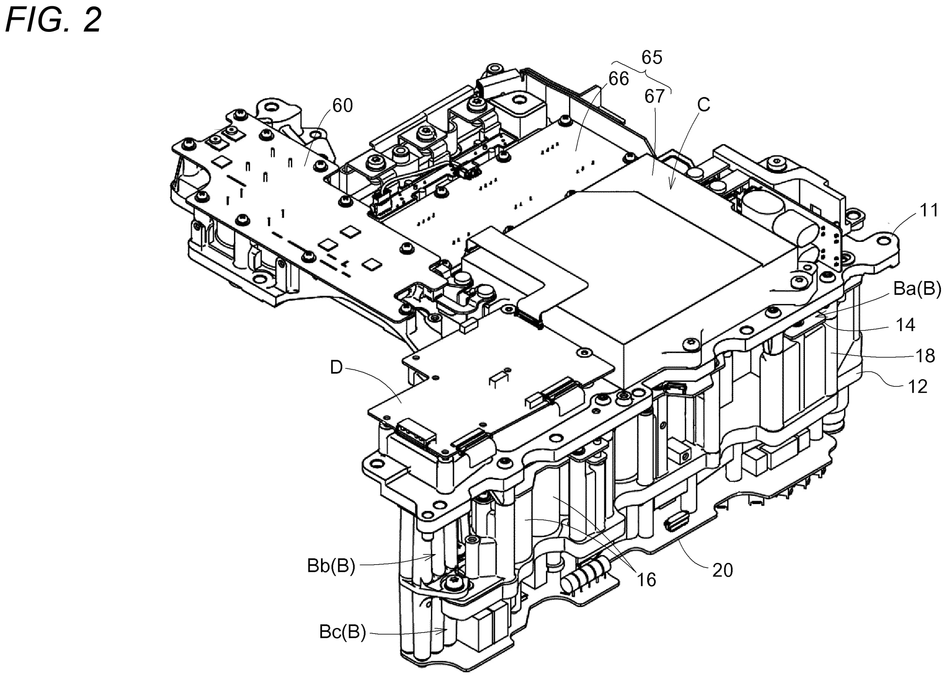

Note that, as illustrated in FIGS. 1 and 2, the power conversion device B includes a plurality of layers in which a plurality of conversion modules (a first conversion module Ba, a second conversion module Bb, and a third conversion module Bc) are arranged in an overlapping manner in the vertical direction. The inverter C is provided above the power conversion device B.

### [Vehicle Drive Device]

As illustrated in FIG. 1, the vehicle drive device A houses the traveling motor M and the gear mechanism Ge in a lower space LS of the housing AH. In the vehicle drive device A, the portion in the lower space LS outside the traveling motor M is closed by a motor cover 1, and the portion in the lower space LS outside the gear mechanism Ge is closed by a gear cover 2. A rotation axis A1 of the traveling motor M is coaxial with a rotation axis of the gear mechanism Ge.

The vehicle drive device A houses the power conversion device B and the inverter C in an upper space HS of the housing AH. The upper space HS is closed by an upper cover 3. Note that the lower space LS and the upper space HS are independent spaces that do not communicate with each other.

As illustrated in FIG. 1, the power conversion device B includes a plurality of layers in which a plurality of conversion modules (the first conversion module Ba, the second conversion module Bb, and the third conversion module Bc) are arranged in a stacked state, and the inverter C is provided on an upper surface of the power conversion device B.

In the present embodiment, as described above, the power conversion device B and the inverter C are integrated to each other and housed in the housing AH of the vehicle drive device A. However, the power conversion device B may be separated from the inverter C. Furthermore, the vehicle drive device A is configured to house each of the power conversion device B and the inverter C therein, but at least one of the power conversion device B and the inverter C may be disposed on an outer wall surface of the housing AH of the vehicle drive device A or outside.

### [Layer Structure of Power Conversion Device]

As illustrated in FIGS. 1 to 3, in the power conversion device B, the first conversion module Ba, the second conversion module Bb, and the third conversion module Bc are arranged in this order from the top to the bottom. In the power conversion device B, a first cooling plate 11 (an example of a cooling plate) is disposed on the upper stage, a second cooling plate 12 (an example of the cooling plate) is disposed below the first cooling plate with a set interval therebetween, and the first cooling plate 11 and the second cooling plate 12 are connected to each other via a spacer or the like to maintain the set interval.

As a specific arrangement, in the power conversion device B, the first conversion module Ba and the second conversion module Bb are arranged below the first cooling plate 11 and above the second cooling plate 12, and the third conversion module Bc is disposed below the second cooling plate 12. In addition, the inverter C is disposed on the first cooling plate 11.

The first conversion module Ba includes a plurality of switching elements 15 (an example of an electronic component) mounted on the upper surface of a plate-like upper substrate 14. The upper substrate 14 is supported by the first cooling plate 11 in a state of being separated downward from the lower surface of the first cooling plate 11. The plurality of switching elements 15 constitute a part of an on board charger (OBC) unit 50 (an example of an on board charger) to be described later.

FIG. 1 illustrates the plurality of switching elements 15 as one block. The plurality of switching elements 15 are arranged in contact with or in proximity to the lower surface of the first cooling plate 11.

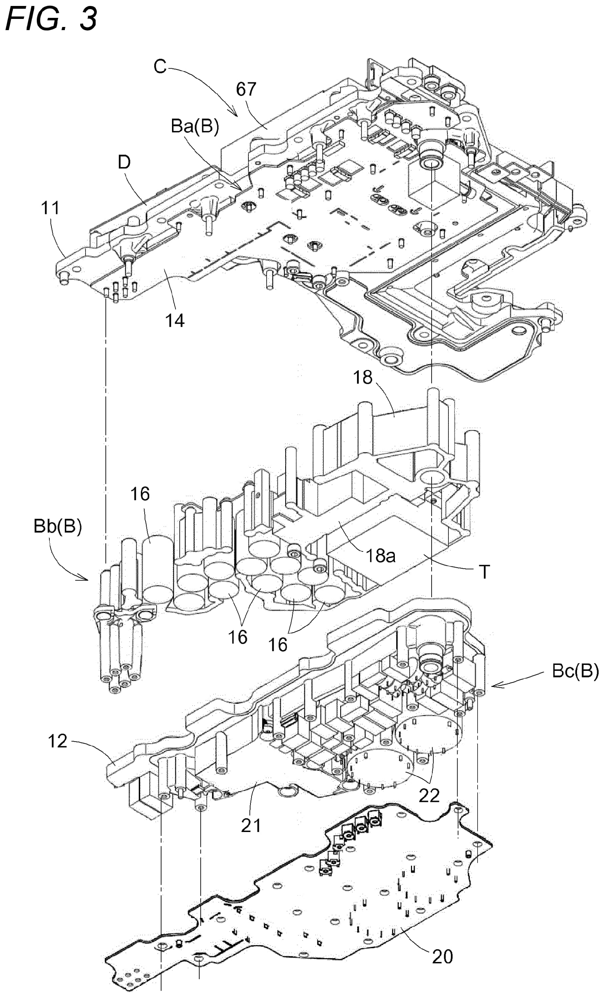

As illustrated in FIG. 3, the second conversion module Bb includes a transformer T (an example of the electronic component) mounted on the lower surface of the upper substrate 14, a plurality of bulk capacitors 16 (an example of an electrolytic capacitor, an example of the electronic component), and a frame member 18. The frame member 18 protrudes downward from the lower surface of the upper substrate 14 in a state of surrounding at least a part of the outer periphery of the transformer T to function as a spacer.

As illustrated in FIGS. 1 and 3, the third conversion module Bc includes a plurality of coil modules 21 (an example of the electronic component) and a plurality of AC filters 22 (an example of the electronic component/an example of a filter substrate) on the upper surface of a lower substrate 20 disposed to be separated downward from the lower surface side of the second cooling plate 12.

The upper surfaces of the plurality of coil modules 21 and the upper surfaces of the plurality of AC filters 22 are arranged in contact with or in proximity to the lower surface of the second cooling plate 12.

### [Cooling Circuit]

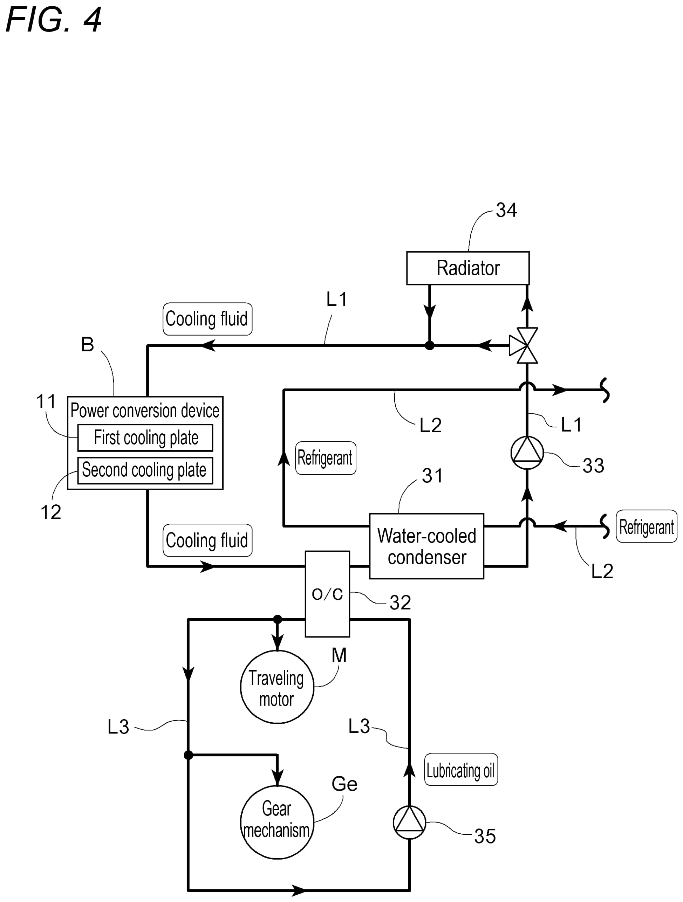

As illustrated in FIG. 4, the vehicle drive device A includes a cooling circuit including a coolant flow path L1 that circulates a coolant as a cooling fluid, a refrigerant flow path L2 that circulates a refrigerant, and a lubricating oil flow path L3 that circulates a lubricating oil. The cooling fluid in the present embodiment is composed of a coolant such as a long life coolant (LLC) containing ethylene glycol, propylene glycol, or the like, or an insulating oil.

The coolant flow path L1 circulates the coolant in the order of the first cooling plate 11 and the second cooling plate 12 of the power conversion device B, an oil cooler 32, a water-cooled condenser 31, and a radiator 34 by driving a coolant pump 33. A flow path R to be described later is a part of the coolant flow path L1.

The refrigerant flow path L2 is configured to supply an externally cooled refrigerant to the water-cooled condenser 31. In the refrigerant flow path L2, hydrofluorocarbon (HFC), hydrofluoroolefin (HFO), or the like is used as the refrigerant.

The lubricating oil flow path L3 supplies a low-temperature lubricating oil to the inside of the traveling motor M and the gear mechanism Ge by driving a hydraulic pump 35.

In this cooling circuit, the coolant cooled by the radiator 34 flows to the flow path R of the first cooling plate 11 and the flow path R of the second cooling plate 12 in the power conversion device B. As a result, the coolant takes heat generated in the first conversion module Ba, the second conversion module Bb, and the third conversion module Bc, and cools the first conversion module Ba, the second conversion module Bb, and the third conversion module Bc. As a result, the temperature of the coolant increases.

The oil cooler 32 is disposed on the downstream side of the power conversion device B in the coolant flow path L1, and performs heat exchange between the coolant circulating in the coolant flow path L1 and the oil. As a result, the temperature of the coolant further increases, and the temperature of the oil decreases. In this manner, the oil whose temperature has decreased is circulated through the lubricating oil flow path L3. As a result, the increase in temperature of the traveling motor M and the gear mechanism Ge in the lower space LS of the housing AH is suppressed, and the traveling motor M and the gear mechanism Ge are lubricated.

The coolant whose temperature has increased in the oil cooler 32 takes heat from the refrigerant in the water-cooled condenser 31, and then radiates heat in the radiator 34 to decrease in temperature, and is supplied to the power conversion device B again.

### [Power Conversion Circuit]

FIG. 5 illustrates a circuit diagram of a power conversion circuit in the power conversion device B. The power conversion circuit includes a filter unit 40, the OBC unit 50, an auxiliary inverter unit 60 and a main inverter unit 65 constituting the inverter C, and a control unit D.

### [Power Conversion Circuit: Filter Unit]

The filter unit 40 includes an input connector 40a, an output connector 40b, the AC filter 22, a relay module 42, the coil module 21, a current detection module 44, and an input and output control unit 45.

The plurality of coil modules 21 and the plurality of AC filters 22 in the filter unit 40 are provided in the third conversion module Bc as illustrated in FIGS. 1 and 3.

In addition, the input and output control unit 45 outputs a control signal to the relay module 42 and acquires a detection signal of the current detection module 44.

### [Power Conversion Circuit: OBC Unit]

As illustrated in FIG. 5, the OBC unit 50 includes the transformer T, a low-voltage connector 50a, a conversion circuit 51, a primary coil control circuit 52, the bulk capacitor 16, a secondary coil control circuit 54, a tertiary coil control circuit 55, a conversion circuit control unit 56, a transformer control unit 57, and a low-voltage control unit 58. The primary coil control circuit 52 controls a primary coil T1 of the transformer T. The bulk capacitor 16 is disposed in a power system that transmits power from the conversion circuit 51 to the primary coil control circuit 52. The secondary coil control circuit 54 controls a secondary coil T2 of the transformer T. The tertiary coil control circuit 55 obtains power from a tertiary coil T3 of the transformer T.

The low-voltage connector 50a supplies power from the tertiary coil control circuit 55 to a low-voltage system battery BAT2.

In the OBC unit 50, the plurality of switching elements 15 constituting parts of the conversion circuit 51, the primary coil control circuit 52, the secondary coil control circuit 54, and the like are mounted as the first conversion module Ba on the upper surface of the upper substrate 14 and cooled by the first cooling plate 11 (see FIG. 1).

Furthermore, as illustrated in FIGS. 1 and 3, the transformer T and the plurality of bulk capacitors 16 of the OBC unit 50 are mounted on the lower surface of the upper substrate 14 to constitute the second conversion module Bb. Note that the transformer T, the plurality of bulk capacitors 16, and elements related thereto may be provided on a substrate different from the upper substrate 14.

As illustrated in FIG. 5, the conversion circuit control unit 56 controls the plurality of switching elements 15 of the conversion circuit 51. In addition, the transformer control unit 57 controls the plurality of switching elements 15 of the primary coil control circuit 52 and the plurality of switching elements 15 of the secondary coil control circuit 54. The low-voltage control unit 58 controls the plurality of switching elements 15 of the tertiary coil control circuit 55.

### [Power Conversion Circuit: Auxiliary Inverter Unit]

As illustrated in FIG. 5, the auxiliary inverter unit 60 of the inverter C functions as a DC-DC converter 70 (hereinafter, also referred to as a converter 70), and includes a first high-voltage connector 60a, an auxiliary drive circuit 61, a DC filter 62, and an auxiliary control unit 63.

The auxiliary drive circuit 61 includes a plurality of switching elements. The auxiliary control unit 63 controls the auxiliary drive circuit 61 to supply high-voltage power to an air conditioner 5 or the like as an auxiliary machine via the first high-voltage connector 60a. That is, the converter 70 includes a plurality of switching elements.

As illustrated in FIG. 2, the auxiliary inverter unit 60 of the inverter C is disposed above the first cooling plate 11 in a region protruding outward from the first cooling plate 11 as viewed in the vertical direction.

### [Power Conversion Circuit: Main Inverter Unit]

As illustrated in FIG. 5, the main inverter unit 65 of the inverter C includes a second high-voltage connector 65a, a motor drive circuit 66 (an example of the electronic component), and a smoothing capacitor 67 (an example of the electronic component). The motor drive circuit 66 includes a plurality of switching elements and supplies power to the traveling motor M. The motor drive circuit 66 is disposed at a position adjacent to the smoothing capacitor 67.

As illustrated in FIG. 2, the main inverter unit 65 including the motor drive circuit 66 and the smoothing capacitor 67 is disposed in contact with or in proximity to the upper surface of the first cooling plate 11. As a result, the main inverter unit 65 is cooled by the first cooling plate 11.

By high-voltage power flowing between the OBC unit 50 and the auxiliary inverter unit 60 being supplied, the main inverter unit 65 functions to supply the high-voltage power from the second high-voltage connector 65a to the main battery BAT1 thereby performing charging. Therefore, in a broad sense, the OBC unit 50 and the main inverter unit 65 can also be referred to as an on-board charger.

Furthermore, the main inverter unit 65 converts power from the main battery BAT1 into three-phase AC power in the motor drive circuit 66 and supplies the three-phase AC power with controlled frequency to the traveling motor M, thereby obtaining driving force that enables traveling of the electric vehicle 100 from the traveling motor M.

### [Power Conversion Circuit: Control Unit]

As illustrated in FIG. 5, the control unit D outputs control signals to the input and output control unit 45, the conversion circuit control unit 56, the transformer control unit 57, the low-voltage control unit 58, and the auxiliary control unit 63.

As illustrated in FIG. 2, the control unit D is disposed at a position adjacent to the smoothing capacitor 67 and overlapping the first cooling plate 11 from above. As a result, the control unit D is cooled by the first cooling plate 11.

### [Power Conversion Circuit: Flow of Current]

Under the control of the relay module 42, the power conversion circuit converts AC power from an AC power supply (basically, a commercial power supply) supplied from the outside of the electric vehicle 100 to the input connector 40a into a direct current in the conversion circuit 51, and applies an alternating current with a set frequency generated by the primary coil control circuit 52 to the primary coil side of the transformer T.

In addition, the high-voltage power output to the secondary coil side of the transformer T is taken out as high-voltage DC power in the secondary coil control circuit 54, and charged into the main battery BAT1 from the second high-voltage connector 65a.

The high-voltage DC power charged in the main battery BAT1 is converted into three-phase AC power by the motor drive circuit 66, and the three-phase AC power with controlled frequency is supplied to the traveling motor M. As a result, the traveling motor M is driven at a target rotation speed, and the traveling of the electric vehicle 100 is realized. In addition, the high-voltage DC power from the main battery BAT1 is DC-DC converted by the auxiliary drive circuit 61, and supplied from first high-voltage connector 60a to the air conditioner 5 or the like.

On the other hand, the low-voltage power output to the tertiary coil side of the transformer T is charged as DC power by the tertiary coil control circuit 55 from the low-voltage connector 50a into the system battery BAT2. Note that the power charged into the system battery BAT2 in this manner is supplied to the control device of the vehicle body or the control equipment.

Furthermore, under the control of the relay module 42, the power conversion circuit sequentially supplies power from the main battery BAT1 to the secondary coil control circuit 54, the transformer T, the primary coil control circuit 52, and the like, thereby generating an AC power supply similar to a commercial power supply, and outputs the AC power supply from the output connector 40b.

### [Cooling Mechanism]

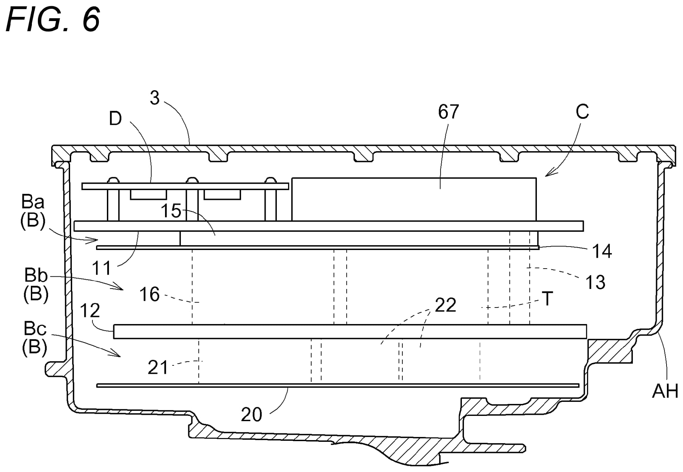

The power conversion device B is cooled by the coolant flowing through the first cooling plate 11 and the second cooling plate 12. As illustrated in FIG. 6, the first cooling plate 11 and the second cooling plate 12 are configured such that the flow paths R are continuous between the first cooling plate 11 and the second cooling plate 12 by a communication path 13 extending in the vertical direction.

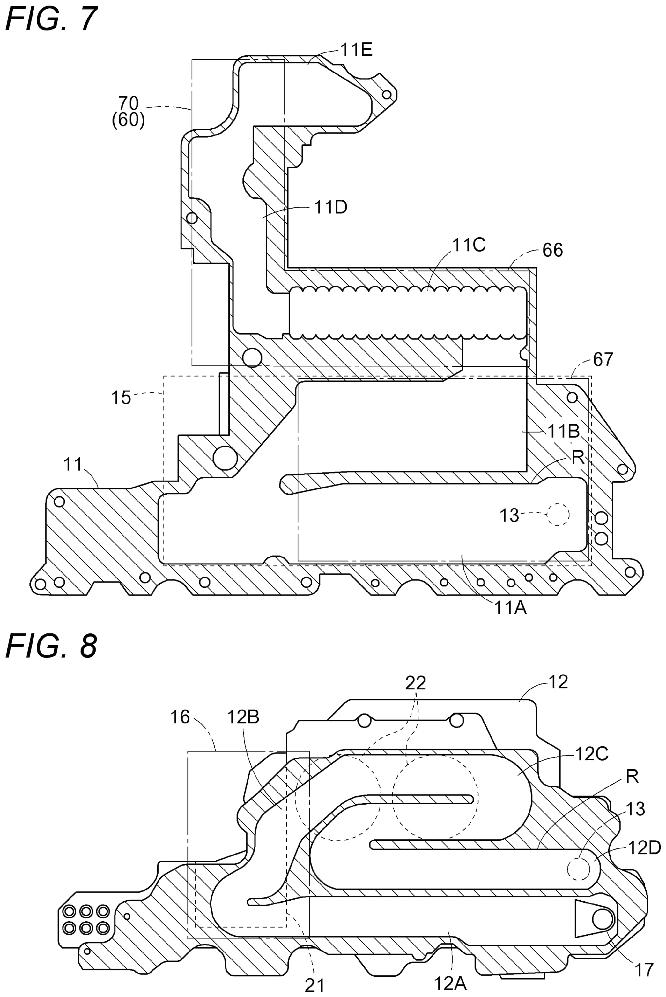

The coolant cooled by the radiator 34 or the like and reaching the power conversion device B flows into the flow path R of the second cooling plate 12 from an inlet 17 of the second cooling plate 12 illustrated in FIG. 8. In the second cooling plate 12, a first portion 12A, a second portion 12B, a third portion 12C, and a fourth portion 12D are continuously formed. The flow path R is formed such that the coolant flows through the first portion 12A, the second portion 12B, the third portion 12C, and the fourth portion 12D in this order. The first portion 12A is extended in the longitudinal direction of the lower substrate 20 (see FIG. 6, and the same applies hereinafter). The second portion 12B is folded back and extended from an end portion of the first portion 12A in a curved manner. The third portion 12C is folded back and extended in the longitudinal direction of the lower substrate 20 from an end portion of the second portion 12B. The fourth portion 12D is folded back and extended in the longitudinal direction of the lower substrate 20 from an end portion of the third portion 12C. The end portion of the fourth portion 12D is connected to the end portion of the communication path 13.

The coolant having flowed through the flow path R formed in the communication path 13 reaches the first cooling plate 11. In the first cooling plate 11, a first portion 11A, a second portion 11B, a third portion 11C, a fourth portion 11D, and a fifth portion 11E are continuously formed. The flow path R is formed such that the coolant flows through the first portion 11A, the second portion 11B, the third portion 11C, the fourth portion 11D, and the fifth portion 11E in this order. The first portion 11A is extended in the longitudinal direction of the lower substrate 20. The second portion 11B is folded back and extended in the longitudinal direction of the lower substrate 20 from an end portion of the first portion 11A. The third portion 11C is folded back and extended in the longitudinal direction of the lower substrate 20 from an end portion of the second portion 11B. The fourth portion 11D is folded back and extended at a right angle to the longitudinal direction of the lower substrate 20 from an end portion of the third portion 11C. The fifth portion 11E is folded back and extended in the longitudinal direction of the lower substrate 20 from an end portion of the fourth portion 11D. An outlet (not illustrated) is formed at a downstream end of the fifth portion 11E, and the coolant flows out of the power conversion device B.

Here, Table 1 shows comparisons of the amount of power generation and the heat-resistant temperature (the heat resistance) between the electronic components.

**[Table 1]**

| | Power supply module | | Main inverter unit | | Converter | Motor |
|---|---|---|---|---|---|---|
| Cooling target | Bulk capacitor | Switching element | Smoothing capacitor | Switching element | Switching element | |
| Amount of heat generation | Small | Small | Large | Large | Small | Large |
| Heat-resistant temperature | Low | High | Low | High | High | High |
| Pattern | A | B | C | D | B | D |

That is, in the conversion modules Ba, Bb, and Bc (the power supply modules), for example, the current value is equal to or less than 50 A, and as compared with other electronic components, the bulk capacitor 16 (an example of a first cooling target, pattern A) has a relatively small amount of heat generation and a relatively low heat-resistant temperature, and the switching element 15 (an example of a third cooling target, pattern B) of the conversion modules Ba, Bb, and Bc has a relatively small amount of heat generation and a relatively high heat-resistant temperature.

In the main inverter unit 65 (the inverter), for example, the current is equal to or less than 700 A, and as compared with other electronic components, the smoothing capacitor 67 (an example of a fourth cooling target, pattern C) has a relatively large amount of heat generation and a relatively low heat-resistant temperature, and the motor drive circuit 66 (the switching element of the inverter, an example of a second cooling target, pattern D) has a relatively large amount of heat generation and a relatively high heat-resistant temperature.

In the converter 70, for example, the current is equal to or less than 20 A, and as compared with other electronic components, the switching element (an example of a fifth cooling target, pattern B) of the converter 70 has a relatively small amount of heat generation and a relatively high heat-resistant temperature. The traveling motor M (in particular, a stator, an example of a sixth cooling target, pattern D), has for example, a current of 700 A or less, and has a relatively large amount of heat generation and a relatively high heat-resistant temperature as compared with other electronic components.

In the present embodiment, the bulk capacitor 16 is disposed at a position corresponding to the first portion 12A and the second portion 12B of the second cooling plate 12 (see FIG. 8), and the switching element 15 of the power supply module is disposed at a position corresponding to the first portion 11A and the second portion 11B of the first cooling plate 11 (see FIG. 7).

In the main inverter unit 65, the smoothing capacitor 67 is disposed at a position corresponding to the first portion 11A and the second portion 11B of the first cooling plate 11, and the switching element of the motor drive circuit 66 is disposed at a position corresponding to the third portion 11C of the first cooling plate 11 (see FIG. 7).

Furthermore, the switching element of the converter 70 is disposed at a position corresponding to the fourth portion 11D of the first cooling plate 11, and the traveling motor M is disposed at a position corresponding to a flow path continuous with the fifth portion 11E of the first cooling plate 11.

As described above, in the cooling plates 11 and 12, the flow path R is formed such that the coolant circulates in the order of the bulk capacitor 16 of the second conversion module Bb (the power supply module), the switching element 15 of the power supply module, the smoothing capacitor 67 of the main inverter unit 65, the switching element of the motor drive circuit 66 of the inverter, the switching element of the converter 70, and the stator of the traveling motor M. Note that the flow path R of the present embodiment is formed such that the coolant flows simultaneously through the switching element 15 and the smoothing capacitor 67.

As described above, since the power conversion device B is cooled by the coolant flowing through the first cooling plate 11 and the second cooling plate 12, an excessive increase in temperature is not caused. Similarly, since the inverter C is cooled by the coolant flowing through the first cooling plate 11, the excessive increase in temperature is not caused.

### [Second Embodiment]

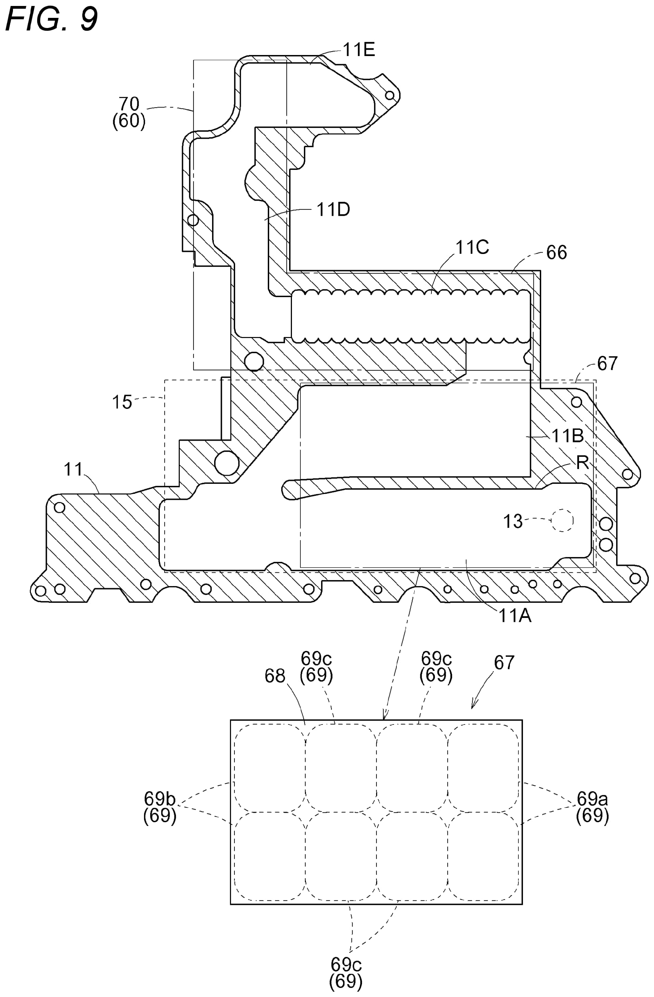

In a power conversion device B of a second embodiment, as illustrated in FIG. 9, the smoothing capacitor 67 is configured by housing a plurality of bale capacitor elements 69 in a case 68. Specifically, the smoothing capacitor 67 illustrated in FIG. 9 includes eight capacitor elements 69. In the eight capacitor elements 69, two capacitor elements 69a are arranged at the right end of the case 68, two capacitor elements 69b are arranged at the left end of the case 68, and four capacitor elements 69c are arranged in the space sandwiched between the capacitor elements 69a and 69b in the case 68. The plurality of capacitor elements 69 are arranged at positions facing the first cooling plate 11. Other configurations are the same as those of the first embodiment.

The positions of the switching element 15 and the smoothing capacitor 67 with respect to the first cooling plate 11 are common on the right side of the first cooling plate 11 as illustrated in FIG. 9. For this reason, the switching element 15 and the smoothing capacitor 67 are simultaneously cooled by the first cooling plate 11 as in the first embodiment. Here, in the present embodiment, as described above, the smoothing capacitor 67 houses the plurality of bale capacitor elements 69 in the case 68, and the capacitor elements 69a and 69b near the left and right ends of the case 68 are arranged so as to easily radiate heat outward, whereas the capacitor elements 69c near the center of the case 68 in the left-right direction are arranged so as not to easily radiate heat to the outside. Therefore, the capacitor elements 69c arranged near the center of the case 68 are likely to have a high temperature, and need to be particularly cooled. In the present embodiment, the capacitor element 69c, which is a cooling target (an object for which cooling is most needed) in the smoothing capacitor 67, is cooled in the first portion 11A on the downstream side of the switching element 15. As described above, it can be understood in the present embodiment that the smoothing capacitor 67 is mainly cooled on the downstream side of the switching element 15.

As described above, in the cooling plates 11 and 12, the flow path R is formed such that the coolant circulates in the order of the bulk capacitor 16 of the second conversion module Bb (the power supply module), the switching element 15 of the power supply module, the smoothing capacitor 67 (in particular, the capacitor element 69c) of the main inverter unit 65, the switching element of the motor drive circuit 66 of the inverter, the switching element of the converter 70, and the stator of the traveling motor M.

As a result, the power conversion device B is cooled by the coolant flowing through the first cooling plate 11 and the second cooling plate 12, and thus an excessive increase in temperature is not caused. Similarly, since the inverter C is cooled by the coolant flowing through the first cooling plate 11, the excessive increase in temperature is not caused.

### [Other Embodiments]

The present disclosure may be configured as follows in addition to the embodiments described above (those having the same functions as those of the embodiments are denoted by the same numbers and reference numerals as those of the embodiments).
(a) The above embodiments have described that the power conversion device B includes the cooling plates 11 and 12 in which the coolant as the cooling fluid flows along each of the plurality of conversion modules Ba, Bb, and Bc, but it is not limited thereto. The power conversion device B may have a configuration in which gas flows through the cooling plates 11 and 12.
(b) The above embodiments have described the configuration in which the cooling plates 11 and 12 are vertically stacked and arranged, but one cooling plate may be provided, or three or more cooling plates may be stacked and arranged.
(c) The above embodiments have described that the cooling plates 11 and 12 have the configuration in which the flow path R is formed such that the cooling fluid flows through the bulk capacitor 16, the switching element 15, the smoothing capacitor 67 and the motor drive circuit 66 of the main inverter unit 65, the converter 70, and the traveling motor M. Alternatively, the cooling plates 11 and 12 may have the following configurations. In the cooling plates 11 and 12, the flow path R may be formed such that the cooling fluid flows through at least the bulk capacitor 16, the switching element 15, and the motor drive circuit 66 of the main inverter unit 65 or the traveling motor M. In the cooling plates 11 and 12, the flow path R may be formed such that the cooling fluid flows through at least the bulk capacitor 16, the switching element 15, the motor drive circuit 66 of the main inverter unit 65, the converter 70, and the traveling motor M. That is, in the cooling plates 11 and 12, the flow path R is only required to be formed such that the cooling fluid flows from the first cooling target having a relatively small amount of heat generation and a relatively low heat-resistant temperature toward the second cooling target having a relatively large amount of heat generation and a relatively high heat-resistant temperature.
(d) In the above embodiments, the coolant flow path L1 circulates the coolant in the order of the first cooling plate 11 and the second cooling plate 12 of the power conversion device B, the oil cooler 32, the water-cooled condenser 31, and the radiator 34 by driving the coolant pump 33. Alternatively, the coolant flow path L1 may circulate the coolant in the order of the first cooling plate 11 and the second cooling plate 12 of the power conversion device B, the water-cooled condenser 31, the oil cooler 32, and the radiator 34 by driving the coolant pump 33.

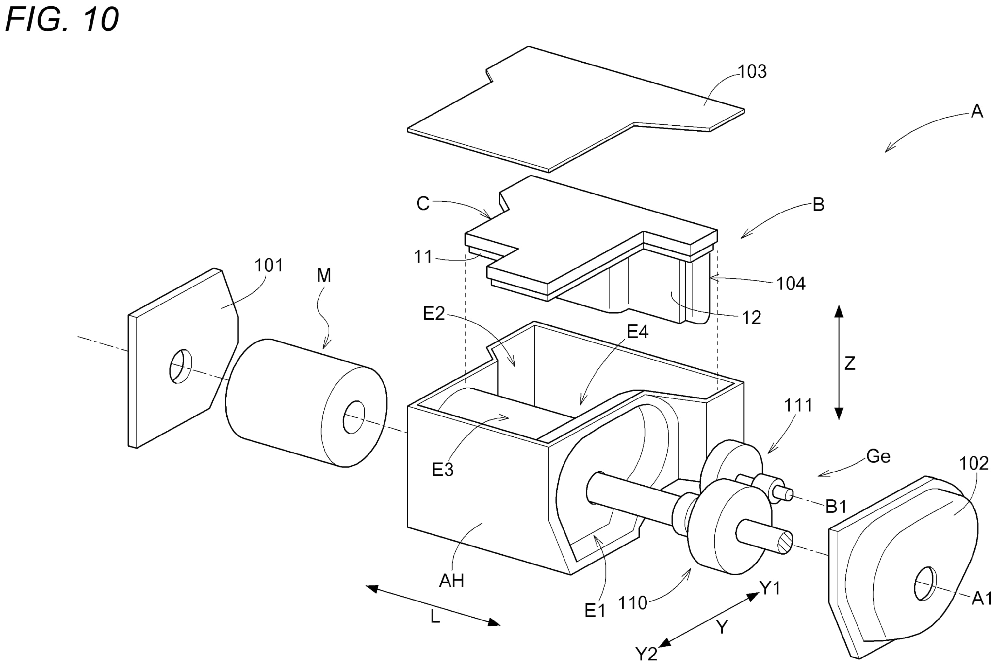

(e) FIG. 10 illustrates the vehicle drive device A that transmits the driving force of the traveling motor M to wheels (not illustrated) with respect to the housing AH. The vehicle drive device A houses the traveling motor M, the gear mechanism Ge that decelerates the driving force of the traveling motor M and transmits the driving force to driving wheels, the power conversion device B, and the inverter C in the housing AH.

The housing AH includes a first housing chamber E1 that houses the traveling motor M, and a second housing chamber E2 that houses the power conversion device B and the inverter C that control power supplied to the traveling motor M. The direction along the rotation axis A1 of a rotor (not illustrated) in the traveling motor M is defined as an axial direction L, the direction orthogonal to the vertical direction and the axial direction L is defined as an axis orthogonal direction Y, and one side in the axis orthogonal direction Y is defined as a first side Y1 in the axis orthogonal direction.

In the housing AH, the portion in the first housing chamber E1 outside the traveling motor M is closed by a first cover 101, and the portion in the first housing chamber E1 outside the gear mechanism Ge is closed by a second cover 102. In addition, the upper opening of the housing AH is closed by an upper cover 103. As a result, the housing AH has a sealing structure.

The gear mechanism Ge includes a differential gear mechanism 110 disposed on the same axis as the rotation axis A1 of the traveling motor M, and a counter gear mechanism 111 disposed on an offset axis B1 offset from the rotation axis A1.

The second housing chamber E2 includes an upper region E3 that is a region above the traveling motor M and overlapping the traveling motor M as viewed in the vertical direction in a vehicle-mounted state mounted on the vehicle, and a side region E4 that is on the first side Y1 in the axis orthogonal direction with respect to the traveling motor M and does not overlap the traveling motor M as viewed in the vertical direction.

The power conversion device B includes the inverter C that controls power supplied to the traveling motor M in the upper portion, at least a part of the inverter C is disposed in the upper region E3, and the power conversion device B is disposed in a region extending downward from the inverter C in the side region E4. In addition, the first cooling plates 11 are disposed side by side along the inverter C, and the second cooling plate 12 is disposed side by side along the conversion module 104 (an example of the power supply module) of the power conversion device B.

That is, in another embodiment (e), in a case where the inverter C is in a horizontal posture as viewed in the direction along the axial direction L (side view), the conversion module 104 of the power conversion device B extends in the vertical direction along the vertical direction Z, so that the inverter C and the conversion module 104 of the power conversion device B are formed in an "inverted L" shape. As a result, the inverter C is disposed in the horizontal posture above the traveling motor M in a region extending in the axis orthogonal direction Y in the upper region E3 of the second housing chamber E2, and the conversion module 104 of the power conversion device B is disposed in the side region E4 extending in the vertical direction in the second housing chamber E2.

In another embodiment (e), the side opposite to the first side Y1 in the axis orthogonal direction is referred to as a second side Y2 in the axis orthogonal direction, and either the first side Y1 in the axis orthogonal direction or the second side Y2 in the axis orthogonal direction may be the front side of the vehicle body.

Note that the configurations disclosed in the above embodiments (including another embodiment, and the same applies hereinafter) can be applied in combination with the configurations disclosed in other embodiments as long as there is no contradiction, and the embodiments disclosed in the present specification are examples, and the embodiments of the present disclosure are not limited thereto, and can be appropriately modified without departing from the object of the present disclosure.

In the embodiments described above, the following configurations are conceived.
<1> An aspect of the power conversion device (B) includes a plurality of electronic components (16, 15, 67, 66, 70, M) having different amounts of heat generation and different heat-resistant temperatures, and the cooling plate (11, 12) through which a cooling fluid that cools a plurality of the electronic components (16, 15, 67, 66, 70, M) flows. A plurality of the electronic components (16, 15, 67, 66, 70, M) include the first cooling target (16) having a relatively small amount of heat generation and a relatively low heat-resistant temperature, and the second cooling target (66) (M) having a relatively large amount of heat generation and a relatively high heat-resistant temperature, and in the cooling plate (11, 12), the flow path (R) is formed such that the cooling fluid flows from the first cooling target (16) toward the second cooling target (66) (M).

In the present embodiment, in the cooling plate (11, 12), the flow path (R) is formed such that the cooling fluid flows from the first cooling target (16) having a relatively small amount of heat generation and a relatively low heat-resistant temperature toward the second cooling target(66) (M) having a relatively large amount of heat generation and a relatively high heat-resistant temperature among the plurality of electronic components (16, 15, 67, 66, 70, M). In this way, the cooling fluid cools the first cooling target (16) and the second cooling target (66) (M) in this order, and thus the first cooling target (16) can be reliably cooled by the cooling fluid. In addition, since the first cooling target (16) has a relatively small amount of heat generation and a relatively low heat-resistant temperature, even if the cooling fluid cools the first cooling target (16), the increase in temperature is small. Therefore, the second cooling target (66) (M) can also be efficiently cooled by the cooling fluid. In this way, it is possible to achieve the power conversion device (B) capable of effectively cooling a plurality of the electronic components (16, 15, 67, 66, 70, M) having different amounts of heat generation and heat-resistant temperatures.

<2> In the power conversion device (B), it is preferable that a plurality of the electronic components (16, 15, 67, 66, 70, M) include, between the first cooling target (16) and the second cooling target (66) (M), the third cooling target (15) having a relatively small amount of heat generation and a relatively high heat-resistant temperature and the fourth cooling target (67) having a relatively large amount of heat generation and a relatively low heat-resistant temperature, and in the cooling plate (11, 12), the flow path (R) be formed such that the cooling fluid flows through the first cooling target (16), the third cooling target (15), the fourth cooling target (67), and the second cooling target (66) (M) in this order.

According to the present embodiment, in the cooling plate (11, 12), the cooling fluid flows from the first cooling target (16) and the third cooling target (15) each having a relatively small amount of heat generation to the fourth cooling target (67) and the second cooling target (66) (M) each having a relatively large amount of heat generation in this order. As a result, it is possible to reliably cool all the cooling targets (the first cooling target (16), the third cooling target (15), the fourth cooling target (67), and the second cooling target (66) (M)) by the cooling fluid flowing through the cooling plate (11, 12). In addition, out of the first cooling target (16) and the third cooling target (15), and out of the fourth cooling target (67) and the second cooling target (66) (M), the former cooling targets (16) (67) have a lower heat-resistant temperature than the latter cooling targets (15) (66) (M). However, since the former cooling targets (16) (67) are cooled by the cooling fluid in a low temperature state, it is possible to avoid a situation in which the former cooling targets (16) (67) exceed the heat-resistant temperature by the cooling fluid.

<3> In the power conversion device (B), it is preferable that a plurality of the electronic components (16, 15, 67, 66, 70, M) include the fifth cooling target (70) having a relatively small amount of heat generation and a relatively high heat-resistant temperature, and the sixth cooling target (M) having a relatively large amount of heat generation and a relatively high heat-resistant temperature, and in the cooling plate (11, 12), the flow path (R) be formed such that the cooling fluid flows through the fifth cooling target (70) and the sixth cooling target (M) in this order on the downstream side of the second cooling target (66).

In the present embodiment, the cooling plate (11, 12) is formed such that the fifth cooling target (70) having a relatively small amount of heat generation and a relatively high heat-resistant temperature is disposed between the second cooling target (66) and the sixth cooling target (M) both having a relatively large amount of heat generation and a relatively high heat-resistant temperature, and the cooling fluid sequentially flows therethrough. With this configuration, the cooling fluid flowing through the cooling plate (11, 12) can flow through the fifth cooling target (70) having a relatively small amount of heat generation, which is disposed between the second cooling target (66) and the sixth cooling target (M), while suppressing exertion of cooling performance. As a result, the cooling fluid flowing through the cooling plate (11, 12) can efficiently cool the sixth cooling target (M) even after flowing through the fifth cooling target (70). As a result, the power conversion device (B) can efficiently cool the plurality of cooling targets.

<4> In the power conversion device (B), it is preferable that the first cooling target be the electrolytic capacitor (16) included in the power supply module, and the second cooling target be the switching element (66) included in the inverter (65) or the stator included in the motor (M).

In the power conversion device (B), the electrolytic capacitor (16) included in the power supply module has a relatively small amount of power generation and a relatively low heat-resistant temperature. On the other hand, both the switching element (66) included in the inverter (65) and the stator included in the motor (M) have a relatively larger amount of power generation and a relatively higher heat-resistant temperature than the other electronic components. Therefore, as in the present embodiment, when the first cooling target is the electrolytic capacitor (16) included in the power supply module and the second cooling target is the switching element (66) included in the inverter (65) or the stator included in the motor (M), the first cooling target (16) and the second cooling target can be efficiently cooled by the cooling fluid. As a result, it is possible to achieve the power conversion device (B) capable of effectively cooling a plurality of the electronic components (16) (66) (M) having different amounts of heat generation and heat-resistant temperatures.

<5> In the power conversion device (B), it is preferable that the first cooling target be the electrolytic capacitor (16) included in the power supply module, the third cooling target be the switching element (15) included in the power supply module, the second cooling target be the switching element (66) included in the inverter (65), and the fourth cooling target be the smoothing capacitor (67) included in the inverter (65).

In the power conversion device (B), the electrolytic capacitor (16) included in the power supply module has a relatively small amount of power generation and a relatively low heat-resistant temperature, and the switching element (66) included in the power supply module has a relatively small amount of heat generation and a relatively high heat-resistant temperature. On the other hand, the smoothing capacitor (67) included in the inverter (65) has a relatively large amount of heat generation and a relatively low heat-resistant temperature, and the switching element (66) included in the inverter (65) has a relatively large amount of power generation and a relatively high heat-resistant temperature. Therefore, as in the present embodiment, by constituting the first to fourth cooling targets with the electronic components (16, 66, 15, 67), the first to fourth cooling targets can be efficiently cooled by the cooling fluid. As a result, it is possible to achieve the power conversion device (B) capable of effectively cooling a plurality of the electronic components (16, 15, 67, 66) having different amounts of heat generation and heat-resistant temperatures.

<6> In the power conversion device (B), it is preferable that the first cooling target be the electrolytic capacitor (16) included in the power supply module, the third cooling target be the switching element (15) included in the power supply module, the second cooling target be the switching element (66) included in the inverter (65), the fourth cooling target be the smoothing capacitor (67) included in the inverter (65), the fifth cooling target be the switching element included in the converter (70), and the sixth cooling target be the stator included in the motor (M).

In the power conversion device (B), the electrolytic capacitor (16) included in the power supply module has a relatively small amount of power generation and a relatively low heat-resistant temperature, and the switching element (15) included in the power supply module has a relatively small amount of heat generation and a relatively high heat-resistant temperature. On the other hand, the smoothing capacitor (67) included in the inverter (65) has a relatively large amount of heat generation and a relatively low heat-resistant temperature, and the switching element (66) included in the inverter (65) has a relatively large amount of power generation and a relatively high heat-resistant temperature. Furthermore, the switching element included in the converter (70) has a relatively small amount of power generation and a relatively high heat-resistant temperature, and the stator included in the motor (M) has a relatively large amount of power generation and a relatively high heat-resistant temperature. Therefore, as in the present embodiment, by constituting the first to sixth cooling targets with the electronic components (16, 66, 15, 67, 70, M), the first to sixth cooling targets can be efficiently cooled by the cooling fluid. As a result, it is possible to achieve the power conversion device (B) capable of effectively cooling a plurality of the electronic components (16, 66, 15, 67, 70, M) having different amounts of heat generation and heat-resistant temperatures.

### (Supplements)

<7> The vehicle drive device (A) including the power conversion device (B) of any one of <1> to <6> includes the housing (AH) including the first housing chamber (E1) that houses the traveling motor (M) and the second housing chamber (E2) that houses the power conversion device (B) that controls power supplied to the traveling motor (M), in which the direction along the rotation axis (A1) of the rotor of the traveling motor (M) is defined as the axial direction L, the direction orthogonal to the rotation axis (A1) as viewed in the vertical direction is defined as the axis orthogonal direction (Y), and one side in the axis orthogonal direction (Y) is defined as the first side (Y1) in the axis orthogonal direction, the second housing chamber (E2) includes the upper region (E3) that is a region above the traveling motor (M) and overlapping the traveling motor (M) as viewed in the vertical direction in a vehicle-mounted state mounted on the vehicle, and the side region (E4) that is on the first side (Y1) in the axis orthogonal direction with respect to the traveling motor (M) and does not overlap the traveling motor (M) as viewed in the vertical direction, the power conversion device (B) has the inverter (C) that controls power supplied to the traveling motor (M) in the upper portion, at least a part of the inverter (C) is disposed in the upper region (E3), and the power conversion device (B) is disposed in a region extending downward from the inverter (C) in the side region (E4).

According to this configuration, the inverter (C) included in the power conversion device (B) is disposed in the upper region (E3) above the traveling motor (M), and the power conversion device (B) is disposed in the side region (E4) not overlapping the traveling motor (M). This arrangement enables the arrangement of the inverter (C) and the power conversion device (B) by effectively utilizing the upper side of the traveling motor (M) and the side region (E4) adjacent to the traveling motor (M) in the axis orthogonal direction (Y).

(8) In the vehicle drive device (A) of (7), the power conversion device (B) preferably has a configuration in which the power supply modules (104) are stacked and arranged in the vertical direction in the side region (E4).

With this configuration, even the power conversion device (B) that is long in the vertical direction like the one with a configuration in which the power supply modules (104) are stacked can be housed in the housing.

### INDUSTRIAL APPLICABILITY

The present disclosure can be used for a power conversion device and a vehicle drive device.

### REFERENCE SIGNS LIST

11: First cooling plate, 12: Second cooling plate, 15: Switching element (third cooling target), 16: Bulk capacitor (electrolytic capacitor, first cooling target), 65: Main inverter unit (inverter), 66: Motor drive circuit (second cooling target), 67: Smoothing capacitor (fourth cooling target), 70: Converter (fifth cooling target), 104: Conversion module (power supply module), A: Vehicle drive device, A1: Rotation axis, AH: Housing, B: Power conversion device, Ba: First conversion module (power supply module), Bb: Second conversion module (power supply module), Bc: Third conversion module (power supply module), C: Inverter, E1: First housing chamber, E2: Second housing chamber, E3: Upper region, E4: Side region, L: Axial direction, M: Traveling motor (motor, second cooling target, sixth cooling target), R: Flow path, Y: Axis orthogonal direction, and Y1: First side in the axis orthogonal direction

## Claims

1. A power conversion device comprising:
a plurality of electronic components having different amounts of heat generation and different heat-resistant temperatures; and
a cooling plate through which a cooling fluid that cools a plurality of the electronic components flows, wherein
a plurality of the electronic components include a first cooling target having a relatively small amount of heat generation and a relatively low heat-resistant temperature, and a second cooling target having a relatively large amount of heat generation and a relatively high heat-resistant temperature, and
in the cooling plate, a flow path is formed such that the cooling fluid flows from the first cooling target toward the second cooling target.

2. The power conversion device according to claim 1, wherein
a plurality of the electronic components include, between the first cooling target and the second cooling target, a third cooling target having a relatively small amount of heat generation and a relatively high heat-resistant temperature and a fourth cooling target having a relatively large amount of heat generation and a relatively low heat-resistant temperature, and
in the cooling plate, the flow path is formed such that the cooling fluid flows through the first cooling target, the third cooling target, the fourth cooling target, and the second cooling target in this order.

3. The power conversion device according to claim 2, wherein
a plurality of the electronic components include a fifth cooling target having a relatively small amount of heat generation and a relatively high heat-resistant temperature, and a sixth cooling target having a relatively large amount of heat generation and a relatively high heat-resistant temperature, and
in the cooling plate, the flow path is formed such that the cooling fluid flows through the fifth cooling target and the sixth cooling target in this order on a downstream side of the second cooling target.

4. The power conversion device according to claim 1, wherein the first cooling target is an electrolytic capacitor included in a power supply module, and the second cooling target is a switching element included in an inverter or a stator included in a motor.

5. The power conversion device according to claim 2, wherein
the first cooling target is an electrolytic capacitor included in a power supply module, and the third cooling target is a switching element included in the power supply module, and
the second cooling target is a switching element included in an inverter, and the fourth cooling target is a smoothing capacitor included in the inverter.

6. The power conversion device according to claim 3, wherein
the first cooling target is an electrolytic capacitor included in a power supply module, and the third cooling target is a switching element included in the power supply module,
the second cooling target is a switching element included in an inverter, and the fourth cooling target is a smoothing capacitor included in the inverter, and
the fifth cooling target is a switching element included in a converter, and the sixth cooling target is a stator included in a motor.
